# EUROPEAN PATENT APPLICATION

(11) **EP 4 763 748 A1**
(43) Date of publication of application: **24.06.2026**
(21) Application number: 25221868.0
(22) Date of filing: 09.12.2025
(51) Int. Cl.: B65G 1/04, B65G 49/08

(54) **A STORAGE SYSTEM FOR STORING PRODUCTS AND A METHOD OF USING A STORAGE SYSTEM**

(30) Priority: 20.12.2024 IT 202400029289
(71) Applicant: Marazzi Group SRL A Socio Unico, 41049 Sassuolo (IT)
(72) Inventor: Domenico, MARCHI, 41049 SASSUOLO (IT)
(74) Representative: Unilin Technologies

(57) **Abstract**

Storage system (100) for storing products and/or semi-finished products (10), preferably slab-shaped products such as ceramic slabs, carried by supports (200), wherein said system (100) comprises:
- a plurality of uprights (110);
- a plurality of support elements (120) of the supports (200) arranged on said uprights (110) so as to define a plurality of storage positions (130) of respective supports (200) arranged in vertical succession along said uprights (110) so as to define columnar storage units (140);
- wherein an access path (A) to said storage positions (130) is defined between said uprights (110) for said supports (200), and wherein said access path (A) is a vertical path,
- wherein the system (100) comprises a lifting device (330) configured to move at least one of said supports (200) between the respective storage position (120) and a free position (150);
- wherein said free position (150) is arranged vertically below said storage position (130);
- wherein said lifting device (330) is mounted on a carrier (300) movable between a loading and/or unloading position (C, S) of said products (10) and said free position (150)*.*

## Description

As is well known, in recent years, the production of ceramic cladding and flooring has evolved toward the production of increasingly large products, moving from traditional tiles to today's large-format slabs with sides potentially more than three meters long.

The slabs can form finished or semi-finished products that are cut in order to produce submultiples. The large sizes of the new formats complicate the logistical management of the production plants, which require more space for handling and/or storing the slabs.

Therefore, new solutions need to be found to maximize the storage capacity of the warehouses.

One purpose of the present invention is to overcome the aforementioned drawbacks of the prior art, using a simple, rational, low-cost solution. These objectives are achieved by the features of the invention set out in the independent claim. A further purpose of the present invention is to provide a storage system that allows shipments to be efficiently prepared based on the order received. The dependent claims set out preferred and/or particularly advantageous aspects of the invention.

A first independent aspect of the invention provides a storage system for storing products and/or semi-finished products carried on supports, wherein said system includes:
- a plurality of uprights;
- a plurality of support elements for the supports arranged on said uprights so as to define a plurality of storage positions of respective supports arranged vertically in sequence along said uprights to define column storage units;
- wherein an access path to said storage positions is defined between said uprights for said supports, and wherein said access path is a vertical path. The system of the first independent aspect comprises a lifting device configured to move at least one of said supports between the respective storage position and a free position; wherein said free position is arranged vertically below said storage position; wherein said lifting device is mounted on a carrier movable between a loading and/or unloading position of said products and said free position. Since the column storage unit is accessed via a vertical path, the storage space can be optimized since there is no need for space beside the column storage unit for handling products and supports.

Preferably, the storage system may include a plurality of column storage units adjacent to each other, for example bordering each other. For example, said column storage units are substantially in contact with each other. This enables the size of the storage system itself to be reduced. In the preferred embodiment, at least one column storage unit of the system is bordered by a column storage unit on each of the sides thereof. According to some embodiments, two adjacent column storage units may share one or more uprights.

For example, said free position is arranged vertically beneath said storage position, preferably beneath a first and lower storage position of the column storage unit. This enables the support carrying the products to be stored to be placed in said free position, beneath the column storage unit, and from there raised to the respective storage position. In the preferred embodiment, the lift can also be designed to remove said support from the storage position thereof.

In the preferred embodiment, said uprights are fastened to a base, wherein a horizontal corridor is defined between said base and a first and lower storage position of said column storage unit. This enables the supports to be moved in said corridor beneath the column storage units, thereby obviating the need to provide said corridors between the storage units and maximizing storage capacity. In particular, the free positions of the column storage units are in communication with each other through said corridor.

Due to the fact that said lift is mounted on a mobile carrier, said supports can be loaded onto the carrier, for example at any position including away from the column storage unit, brought to the free position and from there raised to the storage position, and vice versa for removal, without the product having to pass between multiple carriers and/or lifts.

Preferably, said carrier may comprise a frame, movement means connected to the frame (for example wheels connected to a motor, advantageously to an electric motor) and said lift connected to the frame. The lift may be mounted above the frame, partially or preferably completely overhanging it so as to minimize the footprint of the carrier.

Advantageously, said lift may be a scissor lift. Indeed, the scissor mechanism has the advantage of having an extremely compact retracted state, and an extended state that can reach relatively large heights. This makes the lift, especially when mounted on the carrier, compact and easy to position, or move, beneath the column storage unit.

In the preferred embodiment, the carrier is constrained to move between said free position and said loading and/or unloading position along a substantially straight path, for example on guides or rails. In this way, the construction and/or the movement of the carrier can be simplified. It follows that the lifting device, installed on the carrier, can be configured to be able to reach higher altitudes, thereby increasing the capacity of the storage system, without significantly increasing the construction cost of the carrier. Moreover, the movement of the products in the system is thus greatly simplified and made more efficient.

Advantageously, the system comprises at least one loading position and one unloading position arranged on opposite sides of said columnar storage unit. In this way, the carrier can move from the unloading position to the loading position, through the free position, along said straight path. Preferably, said loading position and said unloading position represent the ends of said straight path, which in turn substantially corresponds to said horizontal corridor. By having two distinct, opposite loading and unloading positions, the handling operations of the system may be simple and efficient.

Advantageously, the plurality of columnar storage units of the storage system are arranged so as to define a plurality of horizontal corridors, arranged side by side, for example in parallel, each provided with a respective loading position, an opposite unloading position, and a respective carrier.

The system can comprise at least one loading and/or unloading device in said loading and/or unloading position, preferably a robotic arm, suitable for loading and/or unloading products on said supports.

In the preferred embodiment in which the system comprises a plurality of loading positions side by side, and/or a plurality of unloading positions side by side, the loading device is movable between the loading positions, or unloading positions, of said plurality. For example, each loading and/or unloading device is movable along guides or rails. In this way, the cost of the system can be kept low while still achieving a high degree of efficiency.

Preferably, said support elements comprise a moveable member having an active position in which it interacts with a respective support and a passive position in which it does not interact with said support; and/or wherein each of said supports comprises one moveable member having an active position in which it interacts with a respective support element and a passive position in which it does not interact with the respective support element. This allows the support to be locked in the respective storage position when the moveable member is in the active position.

Advantageously, when the moveable member is in the passive position, the respective support is able to travel along the access path. For example, when the mobile member is in said passive position, the footprint of the support is reduced.

In the preferred embodiment, each support comprises a plurality of said moveable members.

In the preferred embodiment, in which said support comprises one or more moveable members, the support elements may comprise a bracket on which the moveable member bears, or a housing accommodating the moveable member, when in the active position.

Advantageously, each of said supports and/or of said support elements comprises means for holding said moveable member in the active position. This improves the stability of the supports in the storage positions.

Said moveable members can be advantageously actuated between the active position and the passive position by means of appropriate actuators. According to a preferred embodiment, said lift comprises said actuators. This enables the construction of the supports, as well as any maintenance on said actuators, to be simplified.

Advantageously, said supports are trays or pallets.

Advantageously, the system may comprise a control unit on which a management program for the storage system itself is installed.

In the preferred embodiment of the invention, said products and/or semi-finished products are slab-shaped elements such as ceramic slabs, natural- or reconstructed-stone slabs, and/or wood-based panels.

A second independent aspect of the invention provides a storage system for storing products and/or semi-finished products carried on supports, wherein said system includes:
- a plurality of uprights;
- a plurality of support elements for the supports arranged on said uprights so as to define a plurality of storage positions of respective supports arranged vertically in sequence along said uprights;
wherein said support elements comprise a moveable member having an active position in which it interacts with a support and a passive position in which it does not interact with said support; and/or wherein each of said supports comprises one moveable member having an active position in which it interacts with a respective support element and a passive position in which it does not interact with the respective support element. As shown, the storage system of the second independent aspect may include one or more of the features described above with reference to the first independent aspect.

Furthermore, a third independent aspect of the invention provides a method of using a storage system according to any one of the preceding claims, wherein said support is placed in an access position beneath said column storage element, and said support is lifted vertically to a respective storage position, and wherein said support interacts with said support elements of the respective storage position.

The support provided with movable members used in the system according to the first independent aspect can also be an independent solution. Hence a fifth independent aspect of the invention provides a support for products and/or semi-finished products comprising at least one moveable member that can be moved between an active position in which it is designed to interact with a support element of a storage system and an idle position in which it is designed not to interact with said support element.

Further features and advantages of the invention will become clear by reading the following examples, which are provided as non-limiting examples, with reference to the attached figures.
Figure 1 is a side view of a portion of the system according to the first independent aspect of the invention.
Figure 2 is a top view of the system according to the first independent aspect of the invention.
Figure 3 is a magnified view of the detail III in figure 1.
Figure 4 is a magnified view of the detail IV in figure 1.
Figure 5 is an axonometric bottom view of a support of the system in figure 1.
Figure 6 is a magnified view of the detail VI in figure 5.
Figure 7 is a side view of a carrier of the system in figure 1.

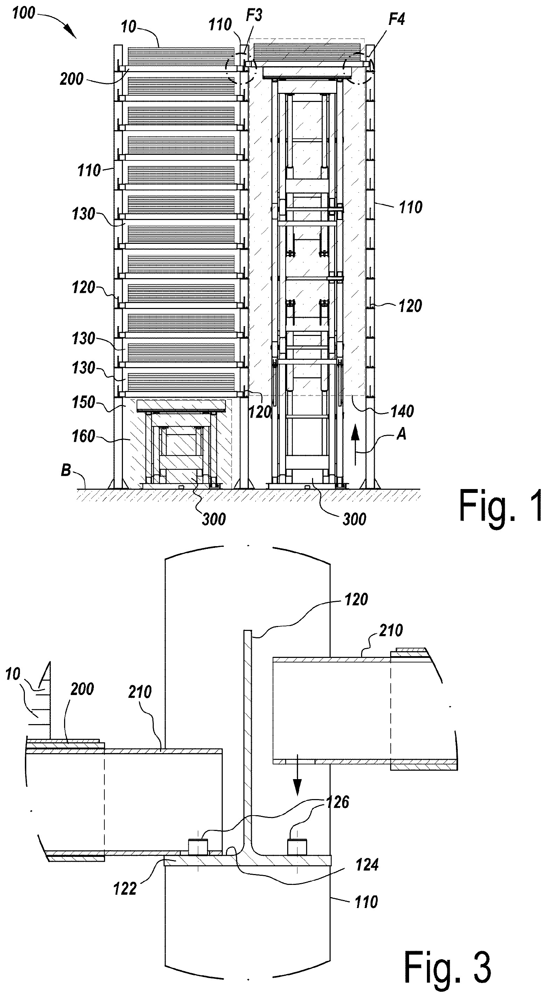

Figure 1 shows a portion of a storage system 100 for products or semi-finished products 10 carried on supports 200. Preferably, said products 10 are large-format ceramic slabs stacked on said supports 200.

The storage system 100 comprises a plurality of uprights 110 fastened to a base B. Each upright 110 comprises a plurality of support elements 120 designed to support the supports 200. Each support element 120 of an upright 110 works with other support elements 120 on other uprights 110, arranged at the same height in relation to the base, to define a storage position 130. In the example shown, each storage position 130 is defined by four support elements 120 mounted on four respective uprights 110.

In the example, a plurality of storage positions 130 are defined between said four uprights 110, said positions being aligned vertically in sequence to define a column storage unit 140. In the example, said column storage unit is defined between four uprights 110, but in other embodiments said column storage unit 140 may be defined between a different number of uprights 110 (a greater or lesser number).

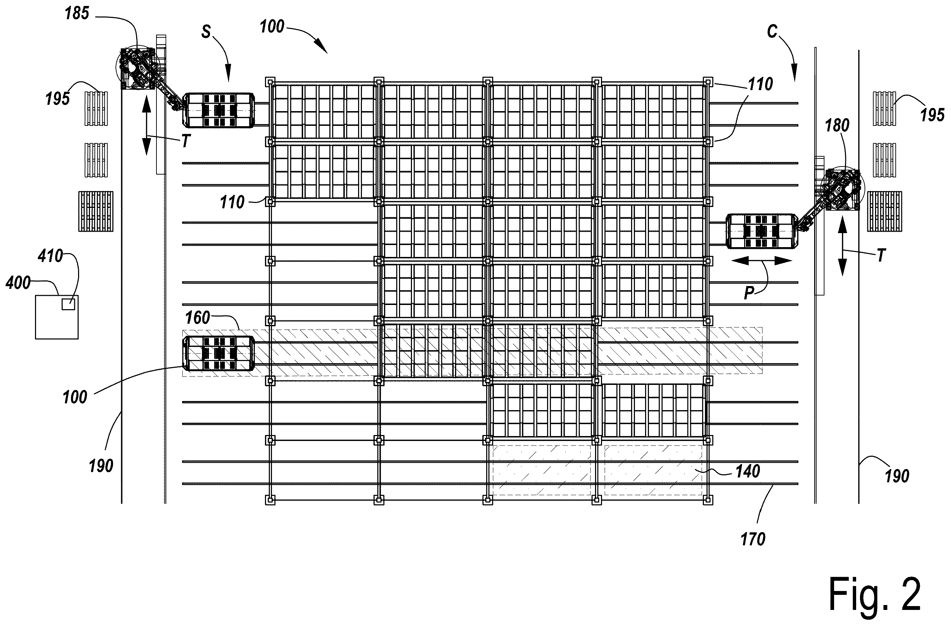

As shown in figure 2, the storage system 100 comprises a plurality of column storage units 140 adjacent to each other. Preferably, two adjacent column storage units 140 that border one another are substantially in contact with each other, in particular sharing one or more uprights. As shown in figure 2, one or more column storage units 140 are bordered by other column storage units 140 on each of the sides thereof, so that said column storage unit 140 can only be accessed from above or below.

Between said four uprights 110, a vertical access path A is defined to said storage positions 130 for the supports 200. In particular, the supports 200 may be supported in a removeable manner by the support elements 120 and are moveable within the column storage unit 140. In some embodiments, access to said storage positions 130 for said supports 200 in a horizontal direction, or in any direction other than the vertical direction, may be prevented.

Within each column storage unit 140, the supports 200 are moveable along the access path A between the respective storage position 130 and a free position 150 located beneath a first and lower storage position 130 of the column storage unit 140. To be stored in the column storage unit 140, the support 200 must be raised from the free position 150 to the respective storage position 130 and, conversely, to be removed, it must be lowered from the storage position 130 to the free position 150 where it can be moved horizontally.

In particular, a horizontal corridor 160 that allows the supports 200 to move horizontally is defined beneath the first and lower storage position 130. The free positions 150 of the multiple column storage units 140 are in communication with each other via said corridor 160.

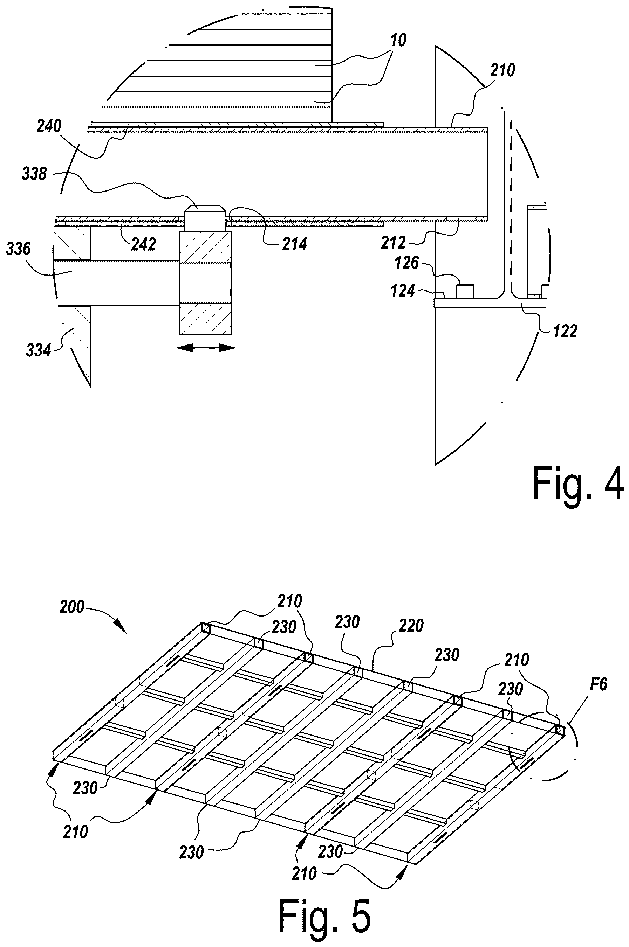

As shown in figures 3 and 4, the support elements 120 comprise a bracket 122 provided with a support surface 124 on which a portion of the support 200 bears, in particular a moveable member 210 of said support 200, as further described below. The support elements 120 also comprise means of holding said mobile member 210 in a respective active position in which it can bear against the support member 120. In the example shown, said holding means are represented by a projection 126, such as a bolt, projecting upwards from the bearing surface 124.

Figure 5 is an axonometric view of the support 200 according to the preferred example. The support 200 is provided in the form of a pallet and is provided with a substantially flat base 220 that enables the products 10 to be loaded and transported. The supports 200 have grooves 230 to engage the forks of a forklift truck (not shown).

The support 200 comprises a plurality of said moveable members 210 accommodated, at least partially, in respective housings 240 formed in the base 220. In particular, the moveable members 210 are moveable between an active position 210 in which they can interact with the support elements 120 and in which they project from the respective housings 24, and a passive position in which they cannot interact with the support elements 120 and are accommodated within the respective housings 240 along most of the length thereof, preferably the entire length thereof. In the example, the moveable members 210 are tubular. In figure 5, the moveable members 210 are shown in the passive position.

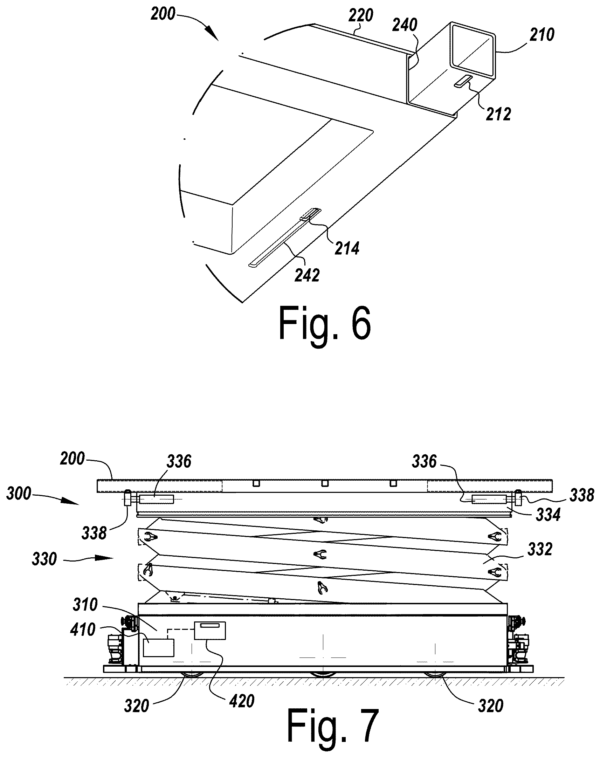

Figure 6 is a magnified view of a detail in figure 5 with the movable members 210 in the active position. As shown in figure 6, each moveable member 210 comprises a first seat 212 able to accommodate the projection 126 from the support elements 120. In the example, said first seat 212 is in the form of a slot formed in the moveable member 210 near to one end of the moveable member 210.

In addition, each moveable member 210 comprises a second seat 214 able to accommodate an actuator designed to drive the moveable member 210 between the active position and the passive position, as further described below. In the example, said second seat 214 is a slot formed in the moveable member 210 in a distal position with respect to the end of the moveable member 210 provided with the first seat 212.

Figures 5 and 6 also show that the housings 240 comprise a slide slot 242 defining a slide path for said actuator. The slide slot 242 and the second seat 214 at least partially overlap, enabling the second seat 214 to be accessed through the slide slot 242. Preferably, the support 200 is made at least partially of metal. Figure 7 shows a side view of a mobile carrier 300 able to transport at least one support 200, which is also visible in figures 1 and 2.

The mobile carrier 300 comprises a frame 310 with associated movement means 320, for example wheels connected to one or more motors, preferably electric motors.

A lift 330 is attached on top of the frame 310 able to lift the support 200 from the free position 150 to the respective storage position 120.

In the preferred embodiment shown in the figure, the lift 330 comprises a scissor mechanism 332 and a lifting platform 334 able to bear the support 200. Figure 7 shows the scissor mechanism 332 in a retracted state, and said lifting platform 334 is arranged substantially on top of the frame 310 in plan view.

In the preferred embodiment, the lift 330 comprises actuators 336 able to drive the moveable members 210 of the support 200. In the example, said actuators 336 are linear actuators and comprise a pushing element 338 that can be inserted into the respective second seat 214 of the moveable member 210, as shown in figure 4.

Returning to figure 2, the system 100 comprises a control unit 400 on which a control program for the storage system 100 itself is installed. Advantageously, the control unit 400 comprises one or more communication devices 410 able to communicate with communication devices 410 installed on the carriers 300 and connected to control devices 420 of the carriers themselves. Said control program can control the movement of the carriers 300, the lift 330 and the actuators 336. Preferably, said communication devices 410 are remote or wireless communication devices.

Figure 2 also shows that the system 100 comprises a loading zone C arranged on the side of the system itself, and an unloading zone S arranged on the opposite side of the system. The carriers 300 of the system are configured to move between the loading zone C, where the products 10 are received on the respective support 200, and the unloading zone S, where the products 10 are unloaded from the respective support 200, via the columnar units 140. Each carrier 300 is constrained to move between the loading position C and the unloading position S along a straight path P, which substantially corresponds to a horizontal corridor 160, made of rails 170. Therefore, the system 100 comprises a plurality of carriers 300 constrained in respective parallel corridors 160.

At the loading position C and the unloading position S, the system comprises respective loading devices 180 and unloading devices 185, in the form of robotic arms. Each loading device 180 and unloading device 185 is movably mounted on rails 190 which constrain the movement thereof in a direction T transverse to the straight path P of the carriers 300. The loading devices 180 and unloading devices 185 are controlled by a control unit 400.

As shown in the figures, when the lift 330 is in the retracted state and, for example, the support 200 is in the free position 150, the moveable members 210 are in the passive position. The lift 330 then switches to an extended state to lift the support to the storage position 130. Since the moveable members 210 are accommodated in the respective housings 240, movement within the access paths A is possible. As shown in figure 4, the lift 330 raises the support 200 slightly above the height of the respective storage position 130. At this height, the actuators 336 drive the moveable members 210 into the active position.

The lift 330 is then lowered to bring the support 200 to the storage position 130 with the moveable members 210 bearing against the brackets 122 and the projections 126 inserted into the respective first seats 212. The lift 330 can then be returned to the retracted state, by removing the pushing members 338 from the respective second seats 214. To remove the support 200, the lift 330 is raised to the storage position where the actuators are moved to a position that enables the pushing members 338 to be inserted into the second respective seats 214. The lift 330 lifts the support 200 slightly to remove the projections 126 from the first seats 212, and the actuators bring the moveable members 210 into the respective passive positions. The lift 330 can then be lowered until the support 220 is in the free position.

With an unloaded support 200 extracted, the carrier can reach the loading zone C where the loading device 180 retrieves products 10 from pallets or racks, which for example have arrived from production, and positions them on the support 200. The carrier 300 then, by moving along the respective rails 170, can carry the support 200 into the respective storage position 130. Once free, the carrier 300 can extract a support loaded with products 100 from the respective storage position 130, in order to bring it into the unloading position S, where the unloading device 185 retrieves products 10 be to be positioned on pallets or racks 195, for example intended for shipping.

The present invention is in no way limited to the embodiments described above, but said covering elements and systems may be made according to different variants without thereby departing from the scope of the present invention.

## Claims

1. A storage system (100) for storing products and/or semi-finished products (10), preferably slab-shaped products such as ceramic slabs, carried by supports (200), wherein said system (100) comprises
- a plurality of uprights (110);
- a plurality of support elements (120) of the supports (200) arranged on said uprights (110) so as to define a plurality of storage positions (130) of respective supports (200) arranged in vertical succession along said uprights (110) so as to define columnar storage units (140);
- wherein an access path (A) to said storage positions (130) is defined between said uprights (110) for said supports (200), and wherein said access path (A) is a vertical path,
- wherein said system (100) comprises a lifting device (330) configured to move at least one of said supports (200) between a respective storage position (120) and a free position (150);
- wherein said free position (150) is vertically arranged below said storage position (130);
- wherein said lifting device (330) is mounted on a carrier (300) movable between a loading and/or unloading position (C, S) of said products (10) and said free position (150).

2. The system (100) according to claim 1 comprising a loading position (C) and an unloading position (S) arranged on opposite sides of said columnar storage units (140).

3. The system (100) according to claim 1 or 2, wherein said carrier (300) is constrained to move between said loading and/or unloading position (C, S) and said free position (150) along a straight path (P).

4. The system (100) according to any one of the preceding claims, wherein said carrier (300) is movable between said loading and/or unloading position (C, S) and said free position (150) on guides or rails.

5. The system (100) according to any one of the preceding claims, comprising a loading and/or unloading device (180, 185) in said loading and/or unloading position (C, S).

6. The system (100) according to claim 5, wherein said loading and/or unloading device (180, 185) comprises a robotic arm.

7. The system (100) according to any of claims 5 or 6, comprising a plurality of said loading and/or unloading positions (C, S) of products (10) and wherein said loading and/or unloading device (180, 185) is movable between the positions of said plurality.

8. The system (100) according to any one of the preceding claims, comprising a plurality of columnar storage units (140) adjacent to each other, preferably wherein two adjacent columnar storage units (140) share one or more uprights (110).

9. The system (100) according to any one of the preceding claims, wherein said uprights (110) are fixed to a base (B) and wherein between said base (B) and a first and lower storage position (130) of said columnar storage unit (140) a horizontal aisle (160) is defined.

10. The system (100) according to claim 9, wherein said carrier is mobile in said horizontal aisle.

11. The system (100) according to any one of the preceding claims, wherein said lift (330) is mounted on a mobile carrier (300), preferably an autonomous guided vehicle (AGV) carrier.

12. The system (100) according to any one of the preceding claims, wherein said support elements (110) comprise a moveable member having an active position in which it interacts with a support (200) and a passive position in which it does not interact with said support (200); and/or wherein each of said supports (200) comprises at least one moveable member (210) having an active position in which it interacts with a respective support element (120) and a passive position in which it does not interact with the respective support element (120).

13. The system (100) according to claim 12, wherein each of said supports (200) and/or of said support elements (120) comprises means (126) for holding said moveable member (210) in the active position.

14. The system (100) according to claim 13 or 14, wherein said lift (330) comprises actuators (336) able to drive said moveable member (210) between the active position and the passive position.

15. A method of using a storage system (100) according to any one of the preceding claims wherein said carrier (200) is placed in an unobstructed access position (150) disposed inferiorly to said columnar storage element (140), vertically lift said carrier (200) to a respective storage position (130) and wherein said carrier (200) interacts with said support elements (120) of said respective storage position (130).
